# EUROPEAN PATENT SPECIFICATION

(11) **EP 2 803 942 B1**
(45) Date of publication and mention of the grant of the patent: **04.08.2021**
(21) Application number: 14168474.6
(22) Date of filing: 15.05.2014
(51) Int. Cl.: G01B 11/245

(54) **Checking apparatus and method for verifying the straightness of drawn bars**
Vorrichtung und Verfahren zur Überprüfung der Geradheit von gezogenen Stäben
Dispositif et procédé de contrôle de la rectitude de barres étirées

(30) Priority: 16.05.2013 IT MI20130803
(43) Date of publication of application: 19.11.2014
(73) Proprietor: Trafilerie Carlo Gnutti S.p.A., 25032 Chlari (BS) (IT)
(72) Inventor: Bertoli, Ezio, 25032 Chiari BS (IT)
(74) Representative: Barbaro, Gaetano

(56) References cited:
- US-A- 1 309 086
- US-A- 3 024 905
- US-A- 3 376 968
- US-A- 4 197 888
- US-A- 4 201 476
- US-A- 4 927 029
- US-A- 4 949 769

## Description

The present invention generally relates to the field of bar or rod drawing and in particular to an apparatus and a method for verifying the straightness of drawn bars along a manufacturing line.

Drawing is a process based on cold plastic deformation of metallic materials, wherein the cross section of a workpiece is reduced. Cold drawing is widely used in the production of profiled bars, tubes, rods and metal wires, because it allows to obtain a very good surface finish and a high dimensional accuracy.

In a drawing apparatus a workpiece is suitably pulled and made to pass through a calibrated hole, whose cavity has a frustum-conical shape converging in the drawing or pulling direction. At the outlet of the calibrated hole the cross-section of the article is therefore smaller than the cross-section it has at the inlet.

Despite the high dimensional precision typical of drawing processes, it is known that drawn products are affected by straightness errors. Bars typically have a slight curvature that determines a deflection, i.e. a straightness error, which is measured in millimeters per length, the length being measured in meters.

Straightness errors may for example be caused by uneven wear of calibrated holes, which determines a uneven discharge of the drawn material in the circumferential direction. Moreover, an incorrect positioning of calibrated holes with respect to the pulling direction of the drawn product may cause straightness problems.

Straightness errors of drawn workpieces are absolutely undesirable in view of their subsequent processing, in particular lathe machining for the manufacturing of metal connectors, screws and the like, where straightness errors of drawn bars lead to remarkable vibration problems on lathe machines that result in defects in the manufacturing of finished parts. In this specific field it is therefore essential that workpieces have very tight straightness tolerances.

US3376968 discloses an apparatus adapted to move elongated articles from one station to another past a location at which a work is performed on the articles, in which the articles are held at each end by grippers mounted on an endless chain.

US4201476 teaches to use a laser gauge to measure a dimension of a workpiece, wherein a laser beam is directed through a beam splitter to a rotating mirror at the focal point of a parabolic mirror. This rotating mirror causes the laser beam to scan the parabolic mirror and establish a series of parallel laser beams emanating from the parabolic mirror and directed toward the workpiece which may be a hot forged bar. US4927029 discloses a device for checking tubes transported along a feed path from a tube container to a distribution mechanism by means of a chain conveyor with feed blades and with a cyclical intermittent motion. The arrangement includes a centering device mounted transversely with respect to the feed path of the tubes at the location where the blades of the chain conveyor are cyclically stopped.

US3024905 discloses an automatic apparatus for inspecting elongated open ended tubular glass envelopes for detecting defects, such as waves in the annular end surface.

US4949769, upon the disclosure of which the preambles of the independent claims 1 and 13 are drafted, discloses mechanisms basically characterized by an endless conveyor having an endless conveyor path which includes an ascending upper run. A plurality of spaced-apart log-engaging lugs travel the endless conveyor path. The log-engaging lugs engage the logs and move then upwardly and forwardly as the log-engaging lugs move. Optical means for measuring the horizontal and vertical diameters of each log are provided as it travels along the upper run of the conveyor.

US1309086 discloses an assorting machine including an article carrier, means for moving the carrier, and means to gage the size of a carried article.

US4197888 discloses log centering apparatus and method for determining the optimum yield axis of logs, and a method employing a light transmission type optical scanner with a reference edge means spaced from the side of the log and located in the light path to the light detector so that the scanner measures the log axis in a more accurate and stable manner and is not sensitive to movement of the light detector.

Drawn bars must therefore be subject to strict quality controls, e.g. using optical instruments that detect the position of a plurality of portions of a bar at predetermined distances, for example at the ends and at a central location, and calculate straightness errors by way of a suitable algorithm. Straightness checks are generally carried out on samples comprising a limited number of drawn bars that are laid on a supporting plane above which a plurality of video cameras are mounted. On the supporting surface a bar may freely assume its own possible curved configuration, thus allowing to verify whether it meets the straightness tolerances required for a specific use.

These quality checks are perfectible in particular concerning the possibility of ensuring an in-line control of all the bars produced by a drawing apparatus, which is an object of the present invention.

It is also an object of this invention to provide a checking apparatus and method that can provide a detection accuracy of straightness errors corresponding to the accuracy of state-of-the-art checking apparatuses and methods based on sampled bars, while at the same time allowing to control all drawn bars produced by a drawing apparatus without penalizing its hourly throughput.

Said object is achieved by way of a checking apparatus and method whose main features are specified in claims 1 and 15, respectively, while other features are specified in the remaining claims.

An idea of solution underlying the present invention is to make a checking apparatus comprising a measuring group associated with a supporting and moving group configured to store a plurality of bars received directly from a drawing apparatus and to bring them one after the other to a measuring station. This configuration allows to arrange the checking apparatus in series with a drawing apparatus without penalizing its hourly throughput.

The supporting and moving group is so configured to move the bars in a vertical direction, thus allowing to minimize the overall size of the checking apparatus. Drawn bars are received on respective vertically movable supporting planes at a picking station of the supporting and moving group, the picking station being aligned with an outlet of a drawing apparatus. The drawn bars are then moved in the vertical direction towards a measuring station proximate to which the measuring group is arranged. The supporting planes support the bars at a plurality of discrete portions that are spaced apart from each other and not along their whole surface. This minimizes the contact surface allowing a bar to quickly take the natural curvature resulting from the drawing process. In fact the retention effect due to friction forces arising from the contact with the supporting surface are much smaller than those resulting from the contact with a continuous surface. To this aim, the supporting planes comprise a plurality of mutually spaced sectors.

Thanks to this configuration it is possible to obtain a detection accuracy of straightness errors corresponding to the accuracy obtainable with prior art checking apparatuses and methods wherein samples of bars are checked, while following the manufacturing throughput of the drawing plant from which the checking apparatus receives the drawn bars.

According to an embodiment of the invention, not only the supporting planes are divided into sectors, but also the whole supporting and moving group, whose frame comprises a plurality of units arranged in parallel. This modular configuration of the supporting and moving group is extremely advantageous, because it allows to simplify the overall structure of the control apparatus.

Each unit includes a set of sectors of the supporting planes and driving means suitable to allow their movement. In order to ensure the proper operation of the supporting and moving group, the units are driven such that the sets of sectors that form the different supporting planes are moved simultaneously thus remaining aligned.

According to an embodiment of the invention, operation of the units of the supporting and moving group is controlled by way of a single motor connected thereto through a motor shaft and the movement of the sectors of the supporting planes is obtained by way of respective mechanical transmissions every one of which comprises a sprocket keyed to the motor shaft, wherein the sprocket directly engages the sectors of the supporting planes.

The sectors of the supporting planes are slidably restrained to the respective units along inner guides and they may advantageously be arranged along these guides in contact among each other. In an operating condition, the sectors moved by the sprocket mutually push each other, thus completely eliminating positioning problems related to mechanical plays and allowing to achieve a very high precision of alignment among the sectors of a same supporting plane, as well as coordination between the checking apparatus and the drawing apparatus from which this receives the drawn bars.

According to a further embodiment of the invention, the distance among the units of the frame of the supporting and moving group is advantageously adjustable, so that the checking apparatus may receive and measure drawn bars having different lengths.

Further advantages and features of the checking apparatus and method according to the present invention will become clear to those skilled in the art from the following detailed and non-limiting description of embodiments thereof with reference to the attached drawings wherein:
- Figure 1 schematically shows an embodiment of the checking apparatus according to the present invention;
- Figure 2 is a schematic cross-sectional view of the apparatus of Figure 1 according to a plane passing through line II-II;
- Figure 3 shows a detail III of figure 2;
- Figure 4 shows a detail IV of figure 2.

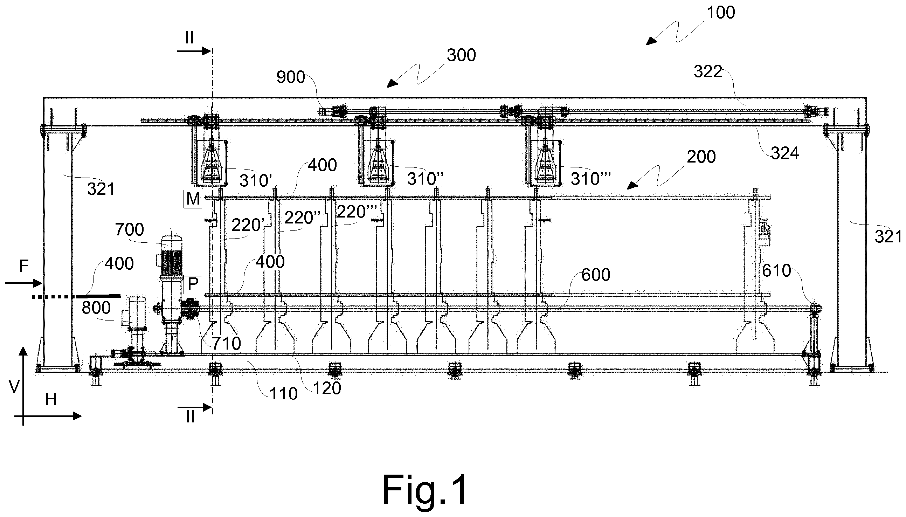

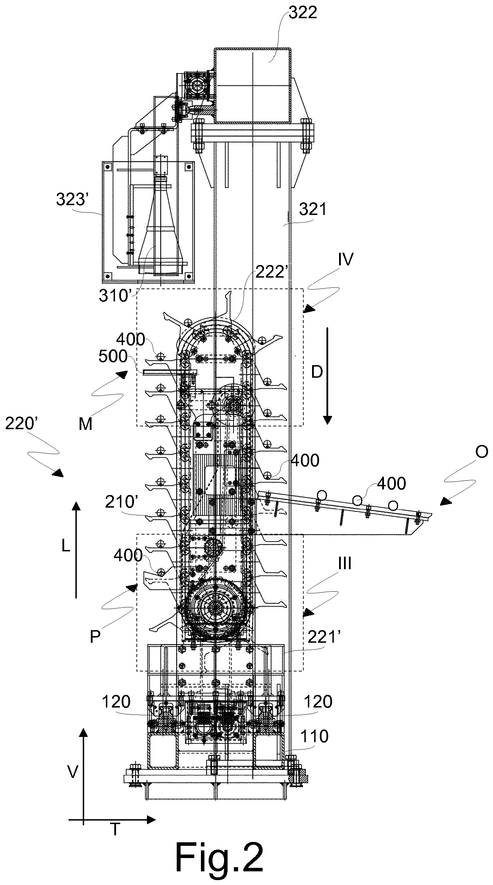

Referring to Figures 1 and 2, the control apparatus according to the invention is generally designated by the reference numeral 100 and includes a supporting and moving group 200 adapted to receive a plurality of bars from a drawing apparatus, as well as measuring group 300 suitable for measuring the straightness of said bars.

In an operating condition, the control apparatus 100 is a part of a drawing plant for bars (not shown) and is arranged at an outlet (not shown) from which finished bars are discharged. This configuration allows loading of the drawn bars produced from the drawing apparatus directly in the checking apparatus 100, which may thus carry out straightness checks on every one of them.

The drawn bars, which are schematically indicated by reference number 400 and e.g. have a circular cross section, come out from the drawing apparatus along a horizontal direction H that is substantially parallel to the supporting surface of the checking apparatus 100, and proceed in this direction toward the control apparatus 100 as schematically indicated by arrow F.

The supporting and moving group 200 comprises a plurality of supporting planes 210 respectively configured to receive a drawn bar 400 at a picking station P and to transport it to a measuring station M proximate to which the measuring group 300 is arranged.

According to the invention, the supporting planes 210 are movable in a generally vertical direction V, perpendicular to the supporting surface of the checking apparatus 100.

The supporting planes 210 are movably restrained to a frame 220 that extends vertically and comprises a base 221 and a top 222. The configuration of the supporting and moving group 200 is such that the supporting planes 210 move cyclically around the frame 220 rising from the base 221 toward the top 222 along a front side of the frame 220. In correspondence with the top 222 the supporting planes 210 are rotated by 180° and then descend towards the base 221 along a rear side of the frame 220, opposite to the front side with respect to a transverse direction T perpendicular to the horizontal and vertical directions H, V. In correspondence of the base 221 of the frame 220 the supporting planes 210 are rotated again by 180° thus reaching the front side of the frame 220.

There are therefore distinguished a lifting direction L of the drawn bars 400 from the base 221 to the top 222, parallel to the vertical direction V, and a descending direction D from the top 222 to the base 221, parallel and opposite to the vertical direction V.

With particular reference to Figure 2, in an operating condition of the apparatus 100 each supporting plane 210 receives a drawn bar 400 at the picking station P of the frame 220, which is arranged proximate to its base 221, and moves it along the lifting direction L toward the top 222 of the frame 220 proximate to which the measuring station M is arranged.

The measuring group 300 is arranged proximate to the measuring station M and comprises a plurality of video cameras 310 arranged above the supporting and moving group 200 in the vertical direction V. The video cameras 310 are also arranged parallel and spaced apart from each other in the horizontal direction H, and are respectively configured to focus a plurality of discrete portions of a drawn bar 400. In the illustrated embodiment, there are shown in particular three video cameras 310 oriented in the vertical direction V and respectively arranged at the ends and at a middle portion of the supporting and moving group 200 in the horizontal direction H. Hence, the video cameras are suitable to focus the end portions and the middle portion of a drawn bar 400.

The video cameras 310 are equipped with a telecentric lens assembly and are mounted on a frame 320 of the measuring group 300 comprising a pair of vertical uprights 321 and a cross member 322 extending in the horizontal direction H. The video cameras 310 are mounted on the cross member 322 by way of suitable frames 323.

As shown in Figure 1, the vertical uprights 321 are arranged at the ends of the supporting and moving group 200 and the cross member 322 with the video cameras 310 is arranged over the top 222 of the frame 220 in the vertical direction V, so that the overall configuration of the whole control apparatus 100 is generally vertical.

During a measuring step, the position of the portions of a bar 400 focused by each of the video cameras 310 is compared to a reference straight direction corresponding to the direction along which the cross member 322 extends. Straightness errors of the bar 400 are calculated on the basis of one or more reference points within each of the portions focused by the video cameras 310.

As shown in Figure 2, in order to facilitate the proper alignment between the drawn bars 400 and the lenses of the video cameras 310, the picking station P includes a concave surface on which the drawn bars 400 coming out from the drawing apparatus are received. Due to their own weights the drawn bars 400 move in the lowest point of the concave surface, which is suitably aligned with the axes of the lenses of the video cameras 310.

The drawn bars 400 are retained at the measuring station M for a predetermined time, for example in the order of about 1 second, so that the movement of the supporting planes 210 is an intermittent movement comprising advancing phases alternating to stop phases.

The measuring time and the times that characterize the phases of advancement and stop of the supporting planes 210 are also synchronized with the production rate of the drawing apparatus. In fact every bar 400 produced by the drawing apparatus is directly loaded in the supporting and moving group 200 on one of its supporting planes 210 and brought to the measuring group 300.

Once past the measuring station M, as explained above the supporting planes 210 go beyond the top 222 of the frame 220 and return to the base 221. Therefore, in correspondence with the top 222 the supporting planes 210 are rotated by 180° relative to the supporting surface of the control apparatus 100 and the drawn bars 400 in contact with one surface of the respective supporting plane 210 during the lifting step from the picking station P to the measuring station M, come into contact with the surface of the supporting plane 210 that precedes it in the lifting direction L.

On the rear side of the frame 220 an outlet station O is arranged. The outlet station comprises a chute that allows to discharge the drawn bars 400 measured by the checking apparatus 100.

As explained above, the supporting planes 210 are moved past the outlet station O toward the base 221 of the frame 220, in correspondence of which are rotated again by 180° relative to the ground and return to the picking station P where they receive a new drawn bar 400 to be measured.

According to the present invention, the supporting planes 210 are not continuous surfaces, but are formed of a plurality of sectors 210', 210", 210"', etc., which are mutually parallel and spaced apart in the horizontal direction H. In an operating configuration of the control apparatus 100 each of the sectors 210', 210", 210''', etc., supports a portion of a drawn bar 400.

In other words, the bars 400 are not supported on continuous surfaces, but on discrete surfaces at a plurality of portions that are mutually spaced apart. This minimizes the contact surface and allows a drawn bar 400 to assume the, possible, curvature resulting from the drawing process more easily and quickly, because of the reduced retaining effect caused by frictional forces caused by the contact with the respective supporting plane.

According to a preferred embodiment of the invention, the supporting planes 210 include seven parallel sectors 210', 210", 210"', etc.. Experimental tests have allowed to verify that this number is a good compromise between the supporting surface required for the handling of the drawn bars 400 and the friction forces acting thereon.

As explained above, movement of the supporting planes 210 is intermittent in order to allow to carry out straightness measurements at the measuring station M. The alternation of advancing phases and stop phases causes accelerations and decelerations of the supporting planes 210 in the vertical direction V and consequently also of the bars 400. This facilitates the arrangement of the drawn bars according to the possible curvature resulting from the drawing process.

This feature of the invention is synergistic with the configuration of the supporting planes 210 in the form of parallel sectors 210', 210", 210"', etc., because it allows to intermittently neutralize friction forces acting on the portions of the drawn bars 400 contacting the sectors 210', 210", 210''', etc., of the respective supporting planes 210, thus further facilitating arrangement of a drawn bar 400 according to possible curved configuration deriving from its drawing process.

All this results in measures of straightness errors that are extremely quick, precise and accurate, which makes the control apparatus 100 compatible with the production throughput of a drawing apparatus, hence suitable to check all the drawn bars 400 produced by the drawing apparatus.

This technical effect would not be obtained by moving the bars along a horizontal plane, because the accelerations and decelerations due to the alternating advancements and stops would result in a movement of the drawn bars 400 along the supporting planes 210, in particular of drawn bars 400 having a circular cross-section, without reducing the frictional forces acting thereon and even penalizing the correct alignment with the lenses of the video cameras of the measuring group M.

Still in the aim of allowing to achieve precise and accurate measurements of straightness errors compatibly with the production throughput of a drawing apparatus, the control apparatus 100 according to the invention is provided with a backlighting system associated with the supporting and moving group 200.

The backlighting system comprises a plurality of lamps 500 movable relative to the frame 220 of the supporting and moving group 200 between an internal position, wherein they do not interfere with the passage of the supporting planes 210 and an outer position, wherein they are arranged between two subsequent supporting planes 210, in particular below the supporting plane 210 arranged at the measuring station M, hence under a drawn bar 400 to be measured.

The lamps 500 are respectively aligned with the video cameras 310 of the measuring group in the horizontal and vertical directions H, V and, during the stop phase for carrying out the measurements, they cast a beam of light in the vertical direction V towards the portions of a bar 400 arranged above, and then toward a video camera 310 arranged thereat. The light beam increases visibility of the portions of the bar 400 and creates a contrast effect which facilitates identification of the reference points for measurement.

As shown in Figures 1 and 2, the lamps 500 and the video cameras 310 are arranged aside the parallel sectors 210', 210", 210"', etc., of the supporting planes 210 in the horizontal direction H. This arrangement allows not to create interference problems between the light rays emitted by the lamps 500 and the sectors 210', 210", 210''', etc., of the supporting planes 210. This arrangement also allows to maximize the contrast effect of the light against the drawn bars 400, thus effectively contributing to the accuracy in determining the straightness errors.

According to an embodiment of the invention, not only the supporting planes 210 are divided into parallel sectors, but also the frame 220 of the whole supporting and moving group 200, which, as shown in figure 1, comprises a plurality of units 220', 220", 220''', etc., operating in parallel, every one of which comprises a respective set of sectors 210', 210", 210''', etc., of the supporting planes 210.

In the illustrated embodiment, the units of the frame 220 are in particular seven, which, as explained above, corresponds to the preferred number of sectors of the supporting planes 210.

According to an embodiment of the invention, in order to control in a synchronized manner the movement of the sectors 210', 210", 210''', etc., of the different sets so as to correctly define the flat surfaces of the support planes 210, the apparatus 100 includes a single drive shaft 600 to which driving means for the operation of respective sets of parallel sectors are connected. Such driving means will be described in detail hereinafter. The motor shaft 600 crosses the parallel units 220', 220", 220''', etc., of the frame 220 and is connected at one end to a motor 700, e.g. an electric motor, through a coupling 710. The motor 700 and the coupling 710 are arranged at one end of the supporting and moving group 200 in the horizontal direction H. At the opposite end the drive shaft 600 is rotatably restrained to a support 610 provided with a suitable bearing.

As explained above, each unit 220', 220", 220''', etc., of the frame 220 houses a set of respective sectors 210', 210", 210''', etc., of the supporting planes 210, which circulate around the respective unit of the frame 220 running from its base to its top along the front side and then down towards the base along the rear side and back again on the front side.

According to an embodiment of the present invention, each set of sectors 210', 210", 210''', etc., of the supporting planes 210 is operated by way of transmission means that are completely mechanical. For simplicity's sake reference will be made in the following to the first unit 220' of the frame 220 only, together with its own set of sectors 210', but it will be understood that the same features are also present in other units of the frame 220.

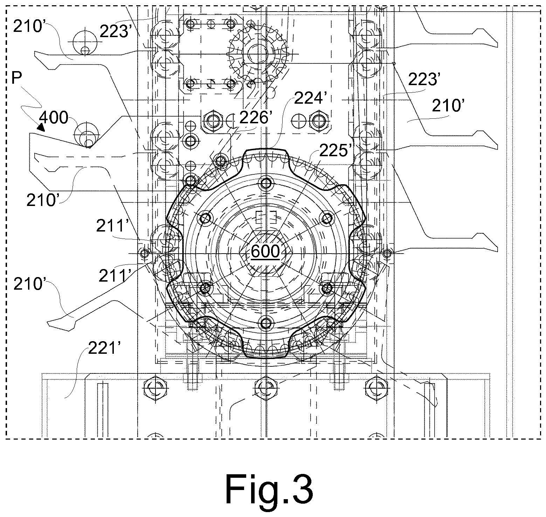

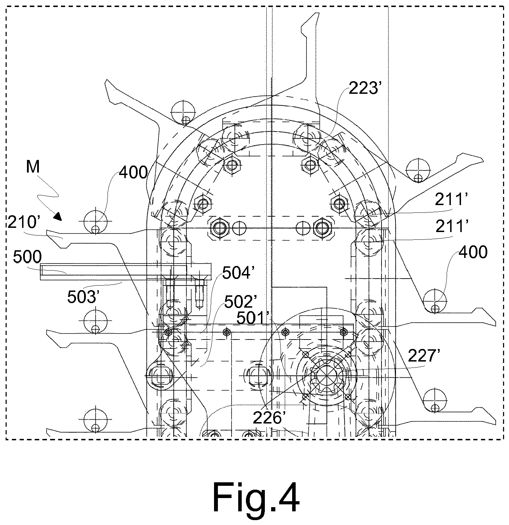

With reference to Figures 2 to 4, the sectors 210' are housed in the unit 220' and slidably arranged along guides 223' formed along its inner periphery and configured to allow their displacement from the base 221' towards the top 222' along the front side of the unit 220' where the picking and measuring stations P, M are arranged and then along the rear side of the unit 220' from the top 222' to the base 221' where the outlet station O is arranged.

In order to facilitate sliding, the sectors 210' may advantageously be provided with bearings 211' mounted on the portion intended to engage the guides 223'. The sectors 210' are arranged in the guides 223' in contact with one another, i.e. without mechanical plays, which allows to maintain the supporting and moving group 200 perfectly synchronized with the drawing apparatus from which it receives the drawn bars 400 for straightness measurements.

In order to allow movement of the sectors 210' along the guides 223', a toothed wheel 224' keyed to the motor shaft 600 is arranged at the base 221' of the container of the unit 220'. The teeth of the wheel are configured to simultaneously engage the ends of two subsequent sectors 210'. In the illustrated embodiment, the teeth of the toothed wheel 224' e.g. engage the roll bearings 211' of the two subsequent sectors 210'.

The toothed wheel 224' driven by the motor shaft 600 moves the sectors 210' thus making them move along the guides 223' between the base 221' and the top 222' of the unit 220'. The thrusts that the sectors 210' exert against one another in the descending direction D from the top 222' to the base 221' of the unit 220' generates a torque on the toothed wheel 224' which results in a force in the lifting direction L allowing to minimize the torque required by the motor 700 to move the sectors 210' from the base 221' to the top 222'.

This configuration also allows to minimize torsion effects of the motor shaft 600 between the different units 220', 220", 220''', etc., which are spaced apart in the horizontal direction H.

In the light of the above, it will be understood that the backlighting system is not associated with all the units 220', 220", 220''', etc., of the frame 220 of the supporting and moving group 200, but only with the units arranged at the video cameras 310 of the measuring group 300, e.g. the three units of the illustrated embodiment.

Referring again for simplicity's sake to the single unit 220', a first toothed pulley 225 is keyed to the motor shaft 600 coaxially to the toothed wheel 224'. A chain 226' is connected to the toothed pulley to drive a second toothed pulley 227' arranged proximate to the top 222' of the unit 220'. The second pulley 227' drives the movement of the displacement means associated with the lamps 500 of the backlighting system. In the illustrated embodiment, these displacement means e.g. comprise a crank 501' connected to the second pulley 227' and a connecting rod 502' restrained at one end to the crank 501' and at the opposite end to a slider 503' movable along a guide 504'. The slider 503' is configured for mounting at least one lamp 500 of the backlighting system.

The transmission ratio between the first and the second pulley 225', 227' is defined so as to allow movement of the slider 503' from the outside to the inside of the unit 220' in a first half of the time required by an advancement phase, so as to allow advancement of another drawn bar 400 to be measured toward the measuring station M. The movement of the unit 220' from the inside to the outside occurs in a second half of the time required by the advancing step, so as to bring the lamp 500 between two subsequent sectors 210' under the drawn bar 400 to be measured.

It will be understood that, the movement of the lamps 500 of the backlighting system might be alternatively obtained with different displacement means, for example by way of linear actuators controlled by a suitable control system. However, the configuration described above is advantageous because it has an extremely simple structure from a mechanical point of view and allows to keep the movements of the lamps 500 perfectly synchronized with the movements of the sectors of the supporting planes 210.

According to a further aspect of the invention, the control apparatus 100 may be configured so as to allow measurement of the straightness of drawn bars 400 having different lengths, for example comprised between 3 and 5 meters.

To this aim, the units 220', 220", 220''', etc., of the frame 220 of the supporting and moving group 200 and the video cameras 310 of the measuring group 300 are movably mounted in the horizontal direction H.

According to a preferred embodiment, the units 220', 220", 220''', etc., of the frame 220 and the video cameras 310 of the measuring group 300 are respectively connected to each other by way of linear actuators configured so as to allow relative movements that are progressively greater the greater is their distance from a fixed point of the control apparatus 100.

In the illustrated embodiment, the apparatus 100 comprises a base 110 on which the units 220', 220", 220''', etc., of the frame 220 of the supporting and moving group 200 are movably arranged along the horizontal direction H.

In order to allow movement of the units 220', 220", 220''', etc., in the horizontal direction H, the base 110 comprises a pair of rails 120 on which the units 220', 220", 220''', etc., are placed in correspondence of their respective bases 221', 221", 221''', etc.. One of the units, for example the unit 220' arranged at the end of the supporting and moving group 200 proximate to which the motor 700 is arranged, is fixed, whereas the other units are movable along the rails 120.

Advantageously also the video cameras 310 of the measuring group 300 are movably mounted in the horizontal direction H, so as to allow to maintain the checking points corresponding to the end portions and the central portion of a drawn bar 400.

To this aim the cross member 322 of the frame 320 is provided with a rail 324 along which the video cameras 310 are slidably mounted. Also in this case one of the video cameras, e.g. the video camera 310' aligned with the unit 220' arranged at the end of the supporting and moving group 200 proximate to which the motor 700 is arranged, is fixed, whereas the other video cameras 310", 310''' are movable along the rail 324.

It will be understood that the provision of a fixed unit and a fixed video camera is not essential in the invention, being it sufficient that the units 220', 220", 220''', etc., and the video cameras 310 are moved relative to a fixed reference point.

The movements of the movable units 220", 220''', etc., and video cameras 310", 310''' which allow to adapt the control apparatus 100 to bars having different lengths may advantageously be coordinated so as to maintain corresponding mutual distances, i.e. the distances between the individual units 220', 220", 220''', etc., of the frame 220 and the distances between the individual video cameras 310 of the measuring group 300. In this way it is possible obtain a uniform distribution of the weight of each drawn bar 400 on the sectors 210', 210", 210''', etc., of the respective supporting plane 210, as well as a proper focus of the end portions and central portion of the drawn bar 400 by the video cameras 310.

According to an embodiment of the invention, the movable units 220", 220''', etc., may be restrained to each other by way of linear actuators configured so as to allow displacements progressively greater the greater is their distance from the fixed unit 220'. These linear actuators (not shown) may for example comprise worm screws, connected to one another and to a same motor 800 by way of respective couplings (not shown). When adjusting the position along the horizontal direction H, the movable units 220", 220"', etc., not only slide along the rails 120, but also along the motor shaft 600 which passes therethrough, thus remaining always restrained thereto.

Similarly, the movable video cameras 310", 310''' are connected to one another by way of linear actuators (not shown) configured to allow displacements that are progressively greater the greater is their distance from the fixed video camera 310'. Also in this case the linear actuators may e.g. comprise worm screws connected together and to a same motor 900 by way of respective couplings (not shown).

The embodiments of the invention herein described and illustrated are only examples susceptible of numerous variants. Driving of the sectors 210', 210", 210''', etc., of the supporting planes 210 might e.g. be achieved by way of individual motors mounted on the units 220', 220", 220''', etc., the motors being synchronized by way of a feedback control system. Moreover, the measuring group 300 might comprise multiple video cameras, for example three groups of three video cameras respectively arranged at the end portions and the central portion of a drawn bar 400.

## Claims

1. A checking apparatus (100) for verifying the straightness of drawn bars, said checking apparatus (100) comprising a supporting and moving group (200) adapted to receive a plurality of drawn bars (400) from a drawing apparatus along a horizontal direction (H) and measuring group (300) suitable to measure the straightness of said drawn bars (400), wherein said supporting and moving group (200) comprises a plurality of supporting planes (210) every one of which is configured to receive a drawn bar (400) at picking station (P) of the supporting and moving group (200) and to move it to a measuring station (M) of the supporting and moving group (200) proximate to which the measuring group (300) is arranged, said supporting planes (210) being movable in a vertical direction (V), perpendicular to said horizontal direction (H), and wherein the supporting planes (210) are formed of a plurality of sectors (210', 210", 210''') parallel to each other and spaced apart in the horizontal direction (H) defining a supporting surface of the checking apparatus (100) for supporting the drawn bars (400) in contact with said supporting surface, wherein the measuring group (300) comprises a plurality of video cameras (310) arranged above the supporting and moving group (200) in the vertical direction (V) and wherein the checking apparatus (100) further comprises a backlighting system, said backlighting system comprising displacement means configured to move a plurality of lamps (500) movable relative to a frame (220) of the supporting and moving group (200) between an inner position, in which they do not interfere with the passage of the support planes (210), and an outer position in which they are located below the supporting plane (210) arranged at the measuring station (M), **characterized in that** said supporting and moving group (200) comprises driving means configured to move said supporting planes (210) in the vertical direction (V) perpendicular to said horizontal direction (H), said horizontal direction (H) being parallel to the supporting surface, so as said supporting planes (210) are movable in the vertical direction (V) to lift said drawn bar (400), in contact with said supporting surface, in a lifting direction (L) parallel to said vertical direction (V), and **in that** the supporting surface of the checking apparatus (100) is perpendicular to said vertical direction (V);
wherein the frame (220) of the supporting and moving group (200) extends in the vertical direction (V) and comprises a base (221) and a top portion (222), the configuration of the supporting and moving group (200) being such that the supporting planes (210) circulate around said frame (220) by moving from said base (221) toward said top portion (222) along a front side of the frame (220), turning by 180° in correspondence with the top portion (222) and descending towards the base (221) along a rear side of the frame (220), opposite to said front side with respect to a transverse direction (T) perpendicular to the horizontal (H) and vertical (V) directions, and along a descending direction (D) from the top portion (222) to the base (221), parallel and opposite to the vertical direction (V) and distinguished from the lifting direction (L), and that in correspondence of the base (221) the supporting planes (210) rotate again by 180° and return on the front side of the frame (220).

2. A checking apparatus (100) according to claim 1, wherein the supporting planes (210) are formed of seven sectors.

3. A checking apparatus (100) according to claim 1, wherein said picking station (P) and measuring station (M) are arranged on the front side of the frame (220) of the supporting and moving group (200) and wherein an outlet station (O) is arranged on the rear side of the frame (220), said outlet station (O) being configured to allow discharge of the drawn bars (400) measured by the measuring group (300).

4. A checking apparatus (100) according to any one of claims 1 to 3, wherein the video cameras (310) of the measuring group (300) are arranged parallel to each other spaced in the horizontal direction (H) and being respectively configured to focus a specific portion of a drawn bar (400).

5. A checking apparatus (100) according to claim 4, wherein the video cameras (310) are mounted on a frame (320) of the measuring group (300), said frame (320) comprising a pair of vertical uprights (321) and a cross member (322) that extends in the horizontal direction (H), the video cameras (310) being mounted on said cross member (322).

6. A checking apparatus (100) according to claim 4 or 5, wherein the lamps (500) of the backlighting system and the video cameras (310) of the measuring group (300) are arranged aside the parallel sectors (210', 210", 210''') of the supporting planes (210) in the horizontal direction (H) and are mutually aligned in the horizontal (H) and vertical (V) directions.

7. A checking apparatus (100) according to any one of claims 1 to 6, wherein the frame (220) of the supporting and moving group (200) comprises a plurality of parallel units (220', 220", 220'''), each of said parallel units (220', 220", 220''') respectively comprising a set of parallel sectors (210', 210", 210''') of the supporting planes (210).

8. A checking apparatus (100) according to claim 7, wherein the supporting and moving group (200) comprises a motor (700) and a driving shaft (600) connected to the motor via a coupling (710), said driving shaft (600) being operatively connected to the parallel units (220', 220", 220''') of the frame (220) for the actuation of the respective sets of sectors (210', 210", 210''') of the supporting planes (210).

9. A checking apparatus (100) according to claim 8, wherein the sets of sectors (210', 210", 210''') of the supporting planes (210) are housed in the respective units (220', 220", 220''') of the frame (220) slidably along guides (223', 223", 223''') formed along their inner periphery, and wherein the sectors (210', 210", 210''') are arranged in said guides (223', 223", 223''') so as to contact each other and are moved along them by means of a toothed wheel (224', 224", 224''') keyed on the driving shaft (600), the teeth of the toothed wheel being configured to simultaneously engage the ends of two consecutive sectors (210', 210", 210'''), so as the sectors (210', 210", 210''') mutually push each other when they are moved.

10. A checking apparatus (100) according to claim 9, wherein the units (220', 220", 220''') of the frame (220) with which the lamps (500) of the backlighting system are associated include a first pulley (225', 225", 225''') keyed on the driving shaft (600) coaxially to the toothed wheel (224', 224", 224''') and a toothed belt (226', 226", 226''') operatively connected to a second toothed pulley (227', 227", 227''') arranged proximate to the top portion (222', 222", 222''') of the unit (220', 220", 220''') of the frame (220), said second toothed pulley (227', 227", 227''') being operatively connected to said displacement means associated with the lamps (500) of the backlighting system, said displacement means being configured to allow movement of the lamps (500) from the outside to the inside of the units (220', 220", 220''') when the sectors (210', 210", 210''') of the supporting planes (210) are moved and from the inside to the outside of the units (220', 220", 220''') when the sectors (210', 210", 210''') of the supporting planes (210) are stopped.

11. A checking apparatus (100) according to claim 10, wherein said displacement means comprise a crank (501', 501", 501''') connected to the second pulley (227', 227", 227''') and a connecting rod (502', 502", 502''') connected at one end to the crank (501', 501", 501''') and at the opposite end to a slider (503', 503", 503''') movable along a guide (504', 504", 504'''), said slider (503', 503", 503''') being configured to allow mounting of at least one lamp (500) of the backlighting system.

12. A checking apparatus (100) according to any one of claims 7 to 11, wherein the units (220', 220", 220''') of the frame (220) of the supporting and moving group (200) and the video cameras (310) of the measuring group (300) are movably mounted along the horizontal direction (H), whereby the checking apparatus (100) may receive drawn bars (400) of different lengths.

13. A checking apparatus (100) according to claim 12, wherein the units (220', 220", 220''') of the frame (220) of the supporting and moving group (200) and the video cameras (310) of measuring group (300) are respectively restrained to each other by way of linear actuators configured so as to allow relative displacements between them, said displacements being progressively greater the greater is their distance from a fixed point of the checking apparatus (100).

14. A drawing apparatus for bars, said drawing apparatus comprising a checking apparatus (100) according to any one of claims 1 to 13, wherein said checking apparatus (100) is arranged at an outlet of drawn bars (400).

15. A method for verifying the straightness of drawn bars, said method comprising the steps of:
receiving drawn bars (400) from a drawing apparatus at a picking station (P) of a checking apparatus (100), said drawn bars (400) being fed in a horizontal direction (H) of said checking apparatus (100);
moving each of said drawn bars (400) towards a measuring station (M) of said checking apparatus (100);
keeping each drawn bar (400) in said measuring station (M) for a predetermined measurement time;
performing a measurement of straightness of each drawn bar (400) in said measuring station (M) during said predetermined measurement time, and
discharging the drawn bars (400) at an outlet station (O) of the checking apparatus (100),
wherein the drawn bars (400) are moved from the picking station (P) to the measuring station (M) according to alternate steps of advancing and stopping along a vertical direction (V) of the checking apparatus (100), perpendicular to said horizontal direction (H), wherein in the checking apparatus the drawn bars (400) are supported in correspondence of discrete portions thereof and wherein during said measuring step each drawn bar (400) is measured by way of a plurality of video cameras (310) respectively arranged at a plurality of said discrete portions, and wherein said discrete portions are lit by lamps (500) arranged so as to project respective light beams towards said discrete portions of the drawn bar (400) and said video cameras (310),
**characterized in that** said drawn bars (400) are moved towards the measuring station (M) in the vertical direction (V) perpendicular to said horizontal direction (H) whilst being supported by supporting planes (210) defining a supporting surface of the checking apparatus (100) for the drawn bars (400), said horizontal direction (H) being parallel to the supporting surface, said supporting planes (210) being moved in the vertical direction (V) to lift said drawn bar (400), in contact with said supporting planes (210), in a lifting direction (L) parallel to said vertical direction (V), the supporting surface of the checking apparatus (100) being perpendicular to said vertical direction (V);
wherein the frame (220) of the supporting and moving group (200) extends in the vertical direction (V) and comprises a base (221) and a top portion (222), the configuration of the supporting and moving group (200) being such that the supporting planes (210) circulate around said frame (220) by moving from said base (221) toward said top portion (222) along a front side of the frame (220), turning by 180° in correspondence with the top portion (222) and descending towards the base (221) along a rear side of the frame (220), opposite to said front side with respect to a transverse direction (T) perpendicular to the horizontal (H) and vertical (V) directions, and along a descending direction (D) from the top portion (222) to the base (221), parallel and opposite to the vertical direction (V) and distinguished from the lifting direction (L), the supporting planes (210) rotating again by 180° in correspondence of the base (221) and returning on the front side of the frame (220).

## Patentansprüche

1. Eine Prüfvorrichtung (100) zum Überprüfen der Geradheit von gezogenen Stäben, wobei die besagte Prüfvorrichtung (100) eine Stütz- und Bewegungs-Baugruppe (200) umfasst, welche dazu ausgelegt ist, eine Mehrzahl von gezogenen Stäben (400) von einer Ziehvorrichtung entlang einer horizontalen Richtung (H) aufzunehmen, sowie eine Mess-Baugruppe (300), welche dazu geeignet ist, die Geradheit der besagten gezogenen Stäbe (400) zu messen, wobei die besagte Stütz- und Bewegungs-Baugruppe (200) eine Mehrzahl von Auflageebenen (210) umfasst, von denen jede dazu ausgelegt ist, einen gezogenen Stab (400) an der Aufnahmestation (P) der Stütz- und Bewegungs-Baugruppe (200) aufzunehmen und ihn zu einer Messstation (M) der Stütz- und Bewegungs-Baugruppe (200), in deren Nähe sich die Mess-Baugruppe (300) befindet, zu bewegen, wobei die besagten Auflageebenen (210) in einer vertikalen Richtung (V) rechtwinklig zu der besagten horizontalen Richtung (H) beweglich sind, und wobei die Auflageebenen (210) aus einer Mehrzahl von Abschnitten (210', 210", 210''') gebildet sind, welche parallel zueinander sind und in der horizontalen Richtung (H) voneinander entfernt sind und eine Stützfläche der Prüfvorrichtung (100) zum Abstützen der gezogenen Stäbe (400) in Kontakt mit der besagten Stützfläche definieren, wobei die Mess-Baugruppe (300) eine Mehrzahl von Videokameras (310) umfasst, welche in der vertikalen Richtung (V) oberhalb der Stütz- und Bewegungs-Baugruppe (200) angeordnet sind, und wobei die Prüfvorrichtung (100) ferner ein Hintergrund-Beleuchtungssystem umfasst, wobei das besagte Hintergrund-Beleuchtungssystem ein Verschiebemittel umfasst, welches dazu ausgelegt ist, eine Mehrzahl von relativ zu einem Rahmen (220) der Stütz- und Bewegungs-Baugruppe (200) beweglicher Lampen (500) zwischen einer inneren Position, in welcher sie den Durchgang der Auflageebenen (210) nicht behindern, und einer äußeren Position, in welcher sie unterhalb derjenigen Auflageebene (210) ist, die sich an der Messstation (M) befindet, zu bewegen, wobei die besagte Stütz- und Bewegungs-Baugruppe (200) ein Antriebsmittel umfasst, welches dazu ausgelegt ist, um die besagten Auflageebenen (210) in der vertikalen Richtung (V) rechtwinklig zu der horizontalen Richtung (H) zu bewegen, wobei die besagte horizontale Richtung (H) parallel zu der stützenden Oberfläche ist, so wie die besagten Auflageebenen (210) in der vertikalen Richtung (V) beweglich sind, um den besagten gezogenen Stab (400) in Kontakt mit der besagten stützenden Oberfläche in einer Hubrichtung (L) parallel zu der besagten vertikalen Richtung (V) anzuheben, und wobei die stützende Oberfläche der Prüfvorrichtung (100) rechtwinklig zu der besagten vertikalen Richtung (V) ist;
wobei der Rahmen (220) der Stütz- und Bewegungs-Baugruppe (200) sich in der vertikalen Richtung (V) erstreckt und einen Basisbereich (221) umfasst sowie einen oberen Bereich (222), wobei die Anordnung der Stütz- und Bewegungs-Baugruppe (200) derart ist, dass die Auflageebenen (210) um den besagten Rahmen herum zirkulieren, indem sie sich entlang einer Vorderseite des Rahmens (220) von dem Basisbereich (221) in Richtung zu dem oberen Bereich (222) bewegen, sich in Übereinstimmung mit dem oberen Bereich (222) um 180° drehen und entlang einer der besagten Vorderseite im Hinblick auf eine Transversalrichtung (T) rechtwinklig zu der horizontalen (H) und der vertikalen (V) Richtung gegenüberliegenden Rückseite des Rahmens (220) zu dem Basisbereich (221) niederfahren entlang einer von dem oberen Bereich (222) zu dem Basisbereich (221) absteigenden Richtung (D), parallel und entgegengesetzt zu der vertikalen Richtung (V) und unterschieden von der Hubrichtung (L), und wobei die Auflageebenen (210) in Übereinstimmung mit dem Basisbereich (221) wieder um 180° rotieren und zu der Vorderseite des Rahmens (220) zurückkehren.

2. Eine Prüfvorrichtung (100) gemäß Anspruch 1, wobei die besagten Auflageebenen (210) aus sieben Abschnitten gebildet sind.

3. Eine Prüfvorrichtung (100) gemäß Anspruch 1, wobei die besagte Aufnahmestation (P) und die Messstation (M) an der Vorderseite des Rahmens (220) der Stütz- und Bewegungs-Baugruppe (200) angeordnet sind, und wobei eine Auslassstation (O) an der Rückseite des Rahmens (220) angeordnet ist, wobei die besagte Auslassstation (O) derart gestaltet ist, dass sie eine Ausgabe der gezogenen Stäbe (400) erlaubt, nachdem diese durch die Mess-Baugruppe (300) vermessen wurden.

4. Eine Prüfvorrichtung (100) gemäß einem der Ansprüche 1 bis 3, wobei die Videokameras (310) der Mess-Baugruppe (300) parallel zueinander und in der horizontalen Richtung (H) beabstandet angeordnet sind und derart konfiguriert sind, dass sie jeweils einen spezifischen Bereich eines gezogenen Stabs fokussieren.

5. Eine Prüfvorrichtung (100) gemäß Anspruch 4, wobei die Videokameras (310) an einem Rahmen (320) der Mess-Baugruppe (300) montiert sind, wobei der besagte Rahmen (320) ein Paar von vertikalen Stützen (321) aufweist sowie einen Querträger (322), der sich in der horizontalen Richtung (H) erstreckt, wobei die Videokameras (310) an dem besagten Querträger (322) montiert sind.

6. Eine Prüfvorrichtung (100) gemäß Anspruch 4 oder 5, wobei die Lampen (500) des Hintergrund-Beleuchtungssystems und die Videokameras (310) der Mess-Baugruppe (300) in der horizontalen Richtung (H) seitlich neben den Abschnitten (210', 210", 210''') der Auflageebenen (210) angeordnet sind und gemeinsam in der horizontalen (H) und vertikalen (V) Richtung ausgerichtet sind.

7. Eine Prüfvorrichtung (100) gemäß einem der Ansprüche 1 bis 6, wobei der Rahmen (220) der Stütz- und Bewegungs-Baugruppe (200) eine Mehrzahl von parallelen Einheiten (220', 220", 220''') umfasst, wobei jede der besagten parallelen Einheiten (220', 220", 220''') jeweils einen Satz von Abschnitte (210', 210", 210''') der Auflageebenen (210) enthält.

8. Eine Prüfvorrichtung (100) gemäß Anspruch 7, wobei die Stütz- und Bewegungs-Baugruppe (200) einen Motor (700) aufweist sowie eine mit Hilfe einer Kupplung (710) an den Motor angeschlossene Antriebswelle, wobei die besagte Antriebswelle (600) an die parallelen Einheiten (220', 220", 220''') des Rahmens (220) funktionswirksam angeschlossen ist zum Antrieb der entsprechenden Sätze von Abschnitten (210', 210", 210''') der Auflageebenen (210).

9. Eine Prüfvorrichtung (100) gemäß Anspruch 8, wobei die Sätze von Abschnitten (210', 210", 210''') der Auflageebenen (210) in den entsprechenden Einheiten (220', 220", 220''') des Rahmens (220) verschiebbar entlang von Führungen (223', 223", 223''') untergebracht sind, welche entlang des inneren Randbereichs ausgebildet sind, und wobei die Abschnitte (210', 210", 210''') in den Führungen (223', 223", 223''') derart angeordnet sind, dass sie sich gegenseitig berühren und auf jenen mit Hilfe eines Zahnrads (224', 224", 224''') bewegt werden, das auf der Antriebswelle (600) aufgekeilt ist, wobei die Zähne des Zahnrads (224', 224", 224''') derart ausgelegt sind, dass sie gleichzeitig mit den Enden von zwei aufeinanderfolgenden Abschnitten (210', 210", 210''') in Eingriff stehen, so dass die Abschnitte (210', 210", 210''') sich gegenseitig anschieben, wenn sie bewegt werden.

10. Eine Prüfvorrichtung (100) gemäß Anspruch 9, wobei die Einheiten (220', 220", 220''') des Rahmens (220), welchen die Lampen (500) des Hintergrund-Beleuchtungssystems zugeordnet sind, eine erste Rolle (225', 225", 225''') umfassen, die koaxial zu dem Zahnrad (224', 224", 224''') auf der Antriebswelle (600) aufgekeilt ist, sowie einen Zahnriemen (226', 226", 226'''), der funktionell an einer zweiten verzahnten Rolle (227', 227", 227''') angeschlossen ist, die in der Nähe des oberen Bereichs (222', 222", 222''') der Einheit (220', 220", 220''') des Rahmens (220) angeordnet ist, wobei die besagte zweite verzahnte Rolle (227', 227", 227''') an dem besagten Verschiebemittel funktionswirksam angeschlossen ist, das den Lampen (500) des Hintergrund-Beleuchtungssystems zugeordnet ist, wobei das besagte Verschiebemittel dazu ausgelegt ist, eine Bewegung der Lampen (500) von außerhalb der Einheiten (220', 220", 220''') nach innen zu erlauben, wenn die Abschnitte (210', 210", 210''') der Auflageebenen (210) bewegt werden, und von innerhalb der Einheiten (220', 220", 220''') nach außen, wenn die Abschnitte (210', 210", 210''') der Auflageebenen (210) stillgesetzt werden.

11. Eine Prüfvorrichtung (100) gemäß Anspruch 10, wobei das besagte Verschiebemittel eine Kurbelwelle (501', 501", 501''') umfasst, die an der zweiten Rolle (227', 227", 227''') angeschlossen ist, sowie eine Verbindungsstange (502', 502", 502'''), die mit einem Ende an der Kurbelwelle (501', 501", 501''') und mit dem entgegengesetzten Ende an einem entlang der Führung (504', 504", 504''') beweglichen Schieber (503', 503", 503''') angeschlossen ist, wobei der besagte Schieber (503', 503", 503''') dazu ausgelegt ist, den Einbau mindestens einer Lampe (500) des Hintergrund-Beleuchtungssystems zu ermöglichen.

12. Eine Prüfvorrichtung (100) gemäß einem der Ansprüche 7 bis 11, wobei die Einheiten (220', 220", 220''') des Rahmens (220) der Stütz- und Bewegungs-Baugruppe (200) und die Videokameras (310) der Mess-Baugruppe (300) entlang der horizontalen Richtung (H) beweglich montiert sind, wobei die Prüfvorrichtung (100) gezogene Stäbe (400) unterschiedlicher Längen aufnehmen kann.

13. Eine Prüfvorrichtung (100) gemäß Anspruch 12, wobei die Einheiten (220', 220", 220''') des Rahmens (220) der Stütz- und Bewegungs-Baugruppe (200) und die Videokameras (310) der Mess-Baugruppe (300) jeweils entsprechend aneinander gehalten werden durch Linearaktuatoren, welche derart ausgelegt sind, um relative Verschiebungen zwischen ihnen zu erlauben, wobei die besagten Verschiebungen zunehmend größer sind, je größer deren Abstand von einem fixen Punkt der Prüfvorrichtung (100) ist.

14. Eine Ziehvorrichtung für Stäbe, wobei die besagte Ziehvorrichtung eine Prüfvorrichtung (100) gemäß einem der Ansprüche 1 bis 13 umfasst, wobei die besagte Prüfvorrichtung (100) an dem Auslass für gezogene Stäbe (400) angeordnet ist.

15. Ein Verfahren zur Überprüfung der Geradheit von gezogenen Stäben, wobei das Verfahren die folgenden Schritte aufweist:
Aufnehmen gezogener Stäbe (400) von einer Ziehvorrichtung an einer Aufnahmestation (P) der Prüfvorrichtung (100), wobei die besagten gezogenen Stäbe (400) in einer horizontalen Richtung (H) der besagten Prüfvorrichtung (100) zugeführt werden;
Bewegen jedes der gezogenen Stäbe (400) in Richtung zu einer Messstation (M) der besagten Prüfvorrichtung (100);
Aufbewahren jedes gezogenen Stabs (400) in der besagten Messstation (M) für eine vorgegebene Messzeit;
Durchführen einer Messung der Geradheit jedes gezogenen Stabs (400) in der besagten Messstation (M) während der besagten vorgegebenen Messzeit, und
Ausgeben der gezogenen Stäbe (400) an einer Auslassstation (O) der Prüfvorrichtung (100),
wobei die gezogenen Stäbe (400) von der Aufnahmestation (P) zu der Messstation (M) bewegt werden in sich abwechselnden Schritten von Fortschreiten und Stoppen entlang einer vertikalen Richtung (V) der Prüfvorrichtung (100), rechtwinklig zu der besagten horizontalen Richtung (H), wobei in der Prüfvorrichtung die gezogenen Stäbe (400) an zugeordnete diskreten Bereichen unterstützt werden, und wobei jeder gezogene Stab (400) während des besagten Messschrittes mit Hilfe einer Mehrzahl von Videokameras (310) gemessen wird, welche jeweils bei einer Mehrzahl von diskreten Bereichen angeordnet sind, und wobei die besagten, diskreten Bereiche von Lampen (500) beleuchtet werden, welche derart angeordnet sind, um entsprechende Lichtstrahlen in Richtung zu den besagten diskreten Bereichen der gezogenen Stäbe (400) und der Videokameras (310) auszusenden,
wobei die besagten gezogenen Stäbe (400) in Richtung zu der Messstation (M) in der vertikalen Richtung (V) rechtwinklig zu der horizontalen Richtung (H) bewegt werden, während sie von den Auflageebenen (210) gestützt werden, welche eine Auflageoberfläche für die gezogenen Stäbe (400) der Prüfvorrichtung (100) bilden, wobei die besagte horizontale Richtung (H) parallel zu der Auflageoberfläche ist, wobei die besagten Auflageebenen (210) in der vertikalen Richtung (V) bewegt werden, um die gezogenen Stäbe (400) in Kontakt mit den Auflageebenen (210) in einer Hubrichtung (L) parallel zu der vertikalen Richtung (V) anzuheben, wobei die Auflageoberfläche der Prüfvorrichtung (100) senkrecht zu der vertikalen Richtung (V) ist;
wobei der Rahmen (220) der Stütz- und Bewegungs-Baugruppe (200) sich in der vertikalen Richtung (V) erstreckt und einen Basisbereich (221) umfasst sowie einen oberen Bereich (222), wobei die Anordnung der Stütz- und Bewegungs-Baugruppe (200) derart ist, dass die Auflageebenen (210) um den besagten Rahmen herum zirkulieren, indem sie sich entlang einer Vorderseite des Rahmens (220) von dem Basisbereich (221) in Richtung zu dem oberen Bereich (222) bewegen, sich in Übereinstimmung mit dem oberen Bereich (222) um 180° drehen und entlang einer der besagten Vorderseite im Hinblick auf eine Transversalrichtung (T) rechtwinklig zu der horizontalen (H) und der vertikalen (V) Richtung gegenüberliegenden Rückseite des Rahmens (220) zu dem Basisbereich (221) niederfahren entlang einer von dem oberen Bereich (222) zu dem Basisbereich (221) absteigenden Richtung (D), parallel und entgegengesetzt zu der vertikalen Richtung (V) und unterschieden von der Hubrichtung (L), wobei die Auflageebenen (210) in Übereinstimmung mit dem Basisbereich (221) wieder um 180° rotieren und zu der Vorderseite des Rahmens (220) zurückkehren.

## Revendications

1. Dispositif de contrôle (100) pour vérifier la rectitude des barres étirées, ledit dispositif de contrôle (100) comprenant un groupe de support et de déplacement (200) adapté pour recevoir une pluralité de barres étirées (400) d'un dispositif d'étirage le long d'une direction horizontale (H) et un groupe de mesure (300) approprié pour mesurer la rectitude desdites barres étirées (400), dans lequel ledit groupe de support et de déplacement (200) comprend une pluralité de plans de support (210), dont chacun est configuré pour recevoir une barre étirée (400) à une station de prélèvement (P) du groupe de support et de déplacement (200) et pour la déplacer jusqu'à une station de mesure (M) du groupe de support et de déplacement (200) à proximité de laquelle le groupe de mesure (300) est agencé, lesdits plans de support (210) étant mobiles dans une direction verticale (V), perpendiculaire à ladite direction horizontale (H), et dans lequel les plans de support (210) sont formés avec une pluralité de secteurs (210', 210", 210''') parallèles entre eux et espacés dans la direction horizontale (H) définissant une surface de support du dispositif de contrôle (100) pour supporter les barres étirées (400) en contact avec ladite surface de support, dans lequel le groupe de mesure (300) comprend une pluralité de caméras vidéo (310) agencées au-dessus du groupe de support et de déplacement (200) dans la direction verticale (V) et dans lequel le dispositif de contrôle (100) comprend en outre un système de rétroéclairage, ledit système de rétroéclairage comprenant des moyens de déplacement configurés pour déplacer une pluralité de lampes (500) mobiles par rapport à un bâti (220) du groupe de support et de déplacement (200) entre une position interne dans laquelle elles n'interfèrent pas avec le passage des plans de support (210) et une position externe dans laquelle elles sont positionnées au-dessous du plan de support (210) agencé au niveau de la station de mesure (M), dans lequel :
ledit groupe de support et de déplacement (200) comprend des moyens d'entraînement configurés pour déplacer lesdits plans de support (210) dans la direction verticale (V) perpendiculaire à ladite direction horizontale (H), ladite direction horizontale (H) étant parallèle à la surface de support, afin que lesdits plans de support (210) sont mobiles dans la direction verticale (V) pour lever ladite barre étirée (400) en contact avec ladite surface de support, dans une direction de levage (L) parallèle à ladite direction verticale (V), et dans lequel la surface de support du dispositif de contrôle (100) est perpendiculaire à ladite direction verticale (V) ;
dans lequel le bâti (220) du groupe de support et de déplacement (200) s'étend dans la direction verticale (V) et comprend une base (221) et une partie supérieure (222), la configuration du groupe de support et de déplacement (200) étant telle que les plans de support (210) circulent autour dudit bâti (220) en se déplaçant de ladite base (221) vers ladite partie supérieure (222) le long d'un côté avant du bâti (220), par rotation de 180° en correspondance avec la partie supérieure (222) et descendant vers la base (221) le long d'un côté arrière du bâti (220), à l'opposé dudit côté avant par rapport à une direction transversale (T) perpendiculaire aux directions horizontale (H) et verticale (V), et le long d'une direction descendante (D) de la partie supérieure (222) à la base (221), parallèlement et à l'opposé de la direction verticale (V) et distincte de la direction de levage (L), et en ce qu'en correspondance de la base (221), les plans de support (210) tournent à nouveau de 180° et reviennent sur le côté avant du bâti (220).

2. Dispositif de contrôle (100) selon la revendication 1, dans lequel les plans de support (210) sont formés avec sept secteurs.

3. Dispositif de contrôle (100) selon la revendication 1, dans lequel ladite station de prélèvement (P) et la station de mesure (M) sont agencées sur le côté avant du bâti (220) du groupe de support et de déplacement (200) et dans lequel une station de sortie (O) est agencée sur le côté arrière du bâti (220), ladite station de sortie (O) étant configurée pour permettre la décharge des barres étirées (400) mesurées par le groupe de mesure (300).

4. Dispositif de contrôle (100) selon l'une quelconque des revendications 1 à 3, dans lequel les caméras vidéo (310) du groupe de mesure (300) sont agencées parallèlement entre elles, espacées dans la direction horizontale (H) et étant respectivement configurées pour se concentrer sur une partie spécifique d'une barre étirée (400).

5. Dispositif de contrôle (100) selon la revendication 4, dans lequel les caméras vidéo (310) sont montées sur un bâti (320) du groupe de mesure (300), ledit bâti (320) comprenant une paire de montants verticaux (321) et un élément transversal (322) qui s'étend dans la direction horizontale (H), les caméras vidéo (310) étant montées sur ledit élément transversal (322).

6. Dispositif de contrôle (100) selon la revendication 4 ou 5, dans lequel les lampes (500) du système de rétroéclairage et les caméras vidéo (310) du groupe de mesure (300) sont agencées à côté des secteurs (210', 210", 210''') parallèles des plans de support (210) dans la direction horizontale (H) et sont mutuellement alignées dans les directions horizontale (H) et verticale (V).

7. Dispositif de contrôle (100) selon l'une quelconque des revendications 1 à 6, dans lequel le bâti (220) du groupe de support et de déplacement (200) comprend une pluralité d'unités parallèles (220', 220", 220'''), chacune desdites unités parallèles (220', 220", 220''') comprenant respectivement un ensemble de secteurs parallèles (210', 210", 210''') des plans de support (210).

8. Dispositif de contrôle (100) selon la revendication 7, dans lequel le groupe de support et de déplacement (200) comprend un moteur (700) et un arbre d'entraînement (600) raccordé au moteur via un couplage (710), ledit arbre d'entraînement (600) étant raccordé de manière opérationnelle aux unités parallèles (220', 220", 220''') du bâti (220) pour l'actionnement des ensembles respectifs de secteurs (210', 210", 210''') des plans de support (210).

9. Dispositif de contrôle (100) selon la revendication 8, dans lequel les ensembles de secteurs (210', 210", 210''') des plans de support (210) sont logés dans les unités (220', 220", 220''') respectives du bâti (220) de manière coulissante le long des guides (223', 223", 223''') formés le long de leur périphérie interne, et dans lequel les secteurs (210', 210", 210''') sont agencés dans lesdits guides (223', 223", 223''') afin d'être en contact entre eux et sont déplacés le long de ces derniers au moyen d'une roue dentée (224', 224", 224''') clavetée sur l'arbre d'entraînement (600), les dents de la roue dentée étant configurées pour mettre simultanément en prise les extrémités de deux secteurs (210', 210", 210''') consécutifs, afin que les secteurs (210', 210", 210''') se poussent mutuellement entre eux lorsqu'ils sont déplacés.

10. Dispositif de contrôle (100) selon la revendication 9, dans lequel les unités (220', 220", 220''') du bâti (220) avec lesquelles les lampes (500) du système de rétroéclairage sont associées, comprennent une première poulie (225', 225", 225''') clavetée sur l'arbre d'entraînement (600) de manière coaxiale par rapport à la roue dentée (224', 224", 224''') et une courroie dentée (226', 226", 226''') raccordée de manière opérationnelle à une seconde poulie dentée (227', 227", 227''') agencée à proximité de la partie supérieure (222', 222", 222''') de l'unité (220', 220", 220''') du bâti (220), ladite seconde poulie dentée (227', 227", 227''') étant raccordée de manière opérationnelle auxdits moyens de déplacement associés avec les lampes (500) du système de rétroéclairage, lesdits moyens de déplacement étant configurés pour permettre le déplacement des lampes (500) de l'extérieur à l'intérieur des unités (220', 220", 220''') lorsque les secteurs (210', 210", 210''') des plans de support (210) sont déplacés et de l'intérieur à l'extérieur des unités (220', 220", 220''') lorsque les secteurs (210', 210", 210''') des plans de support (210) sont arrêtés.

11. Dispositif de contrôle (100) selon la revendication 10, dans lequel lesdits moyens de déplacement comprennent une manivelle (501', 501", 501'") raccordée à la seconde poulie (227', 227", 227''') et une tige de raccordement (502', 502", 502''') raccordée au niveau d'une extrémité, à la manivelle (501', 501", 501'") et au niveau de l'extrémité opposée, à une glissière (503', 503", 503''') mobile le long d'un guide (504', 504", 504'''), ladite glissière (503', 503", 503''') étant configurée pour permettre le montage d'au moins une lampe (500) du système de rétroéclairage.

12. Dispositif de contrôle (100) selon l'une quelconque des revendications 7 à 11, dans lequel les unités (220', 220", 220''') du bâti (220) du groupe de support et de déplacement (200) et les caméras vidéo (310) du groupe de mesure (300) sont montées de manière mobile le long de la direction horizontale (H), moyennant quoi le dispositif de contrôle (100) peut recevoir des barres étirées (400) de différentes longueurs.

13. Dispositif de contrôle (100) selon la revendication 12, dans lequel les unités (220', 220", 220''') du bâti (220) du groupe de support et de déplacement (200) et les caméras vidéo (310) du groupe de mesure (300) sont respectivement retenues les unes par rapport aux autres au moyen d'actionneurs linéaires configurés afin de permettre des déplacements relatifs entre elles, lesdits déplacements étant progressivement plus importants, au fur et à mesure que leur distance par rapport à un point fixe du dispositif de contrôle (100) est importante.

14. Dispositif d'étirage pour barres, ledit dispositif d'étirage comprenant un dispositif de contrôle (100) selon l'une quelconque des revendications 1 à 13, dans lequel ledit dispositif de contrôle (100) est agencé au niveau d'une sortie de barres étirées (400).

15. Procédé pour vérifier la rectitude des barres étirées, ledit procédé comprenant les étapes suivantes :
recevoir des barres étirées (400) d'un dispositif d'étirage au niveau d'une station de prélèvement (P) d'un dispositif de contrôle (100), lesdites barres étirées (400) étant alimentées dans une direction horizontale (H) dudit dispositif de contrôle (100) ;
déplacer chacune desdites barres étirées (400) vers une station de mesure (M) dudit dispositif de contrôle (100) ;
maintenir chaque barre étirée (400) dans ladite station de mesure (M) pendant un temps de mesure prédéterminé ;
réaliser une mesure de rectitude de chaque barre étirée (400) dans ladite station de mesure (M) pendant ledit temps de mesure prédéterminé, et
décharger les barres étirées (400) au niveau d'une station de sortie (O) du dispositif de contrôle (100),
dans lequel les barres étirées (400) sont déplacées de la station de prélèvement (P) à la station de mesure (M) selon des étapes alternées d'avancement et d'arrêt le long d'une direction verticale (V) du dispositif de contrôle (100), perpendiculaire à ladite direction horizontale (H), dans lequel dans le dispositif de contrôle, les barres étirées (400) sont supportées en correspondance de leurs parties discrètes et dans lequel pendant ladite étape de mesure, chaque barre étirée (400) est mesurée au moyen d'une pluralité de caméras vidéo (310) respectivement agencées au niveau d'une pluralité desdites parties discrètes, et dans lequel lesdites parties discrètes sont éclairées par des lampes (500) agencées afin de projeter des faisceaux lumineux respectifs vers lesdites parties discrètes de la barre étirée (400) et lesdites caméras vidéo (310),
dans lequel lesdites barres étirées (400) sont déplacées vers la station de mesure (M) dans la direction verticale (V) perpendiculaire à ladite direction horizontale (H) tout en étant supportées par des plans de support (210) définissant une surface de support du dispositif de contrôle (100) pour les barres étirées (400), ladite direction horizontale (H) étant parallèle à la surface de support, lesdits plans de support (210) étant déplacés dans la direction verticale (V) pour lever ladite barre étirée (400), en contact avec lesdits plans de support (210), dans une direction de levage (L) parallèle à ladite direction verticale (V), la surface de support du dispositif de contrôle (100) étant perpendiculaire à ladite direction verticale (V) ;
dans lequel le bâti (220) du groupe de support et de déplacement (200) s'étend dans la direction verticale (V) et comprend une base (221) et une partie supérieure (222), la configuration du groupe de support et de déplacement (200) étant telle que les plans de support (210) circulent autour dudit bâti (220) en se déplaçant de ladite base (221) vers ladite partie supérieure (222) le long d'un côté avant du bâti (220), par rotation de 180° en correspondance avec la partie supérieure (222) et descendant vers la base (221) le long d'un côté arrière du bâti (220), à l'opposé dudit côté avant par rapport à une direction transversale (T) perpendiculaire aux directions horizontale (H) et verticale (V), et le long d'une direction descendante (D) de la partie supérieure (222) à la base (221), parallèle et opposée à la direction verticale (V) et distincte de la direction de levage (L), les plans de support (210) tournant à nouveau de 180° en correspondance de la base (221) et revenant sur le côté avant du bâti (220).
